# EUROPEAN PATENT APPLICATION

(11) **EP 4 745 033 A1**
(43) Date of publication of application: **20.05.2026**
(21) Application number: 25184772.9
(22) Date of filing: 24.06.2025
(51) Int. Cl.: B64C 13/04, B64C 13/14, B64C 27/56

(54) **A WEIGHT BALANCING MECHANISM**

(30) Priority: 19.11.2024 TR 2024016281
(71) Applicant: Tusas- Turk Havacilik Ve Uzay Sanayii Anonim Sirketi, 06980 Ankara (TR)
(72) Inventor: PETEKKAYA, Ali Tolga, 06980 ANKARA (TR)
(74) Representative: Berkkam, Ayfer

(57) **Abstract**

This invention, relates to a body (2), at least one control rod (3) located in the body (2) and moved by the user's triggering, at least one joint (4) located at one end of the control rod (3) and moving together with the control rod (3), at least one lever (5) on the body (2), which moves the joint (4) when triggered by the user, at least one main spring (6), one end of which is mounted on the joint (4) and the other end on the lever (5) and whose tension is adjusted by moving the lever (5) together with the lever (5) when the lever (5) is triggered and moved by the user, at least one adjustment mechanism (7) located on the body (2) and allowing the main spring (6) to be held at a tension set by the user, a first position (I) in which the main spring (6) is in a tension predetermined by the user, a second position (II) in which the main spring (6) is held in tension different from the amount of tension it has in the first position (I) by triggering the user's joint (4) and the weight of the control rod is balanced.

## Description

The present invention relates to a weight balancing mechanism for preventing the control rods from tilting in one direction due to their weight.

There are control rods used in vehicles, especially in aircraft such as helicopters, which allow the pilot to steer the aircraft. Due to their geometric shape and positioning in the aircraft, the control rods are not fully balanced, but due to their weight, they bend more in the direction of a force input. The tendency of the control stick to tilt in one direction has a negative effect on the control load of the aircraft. The aircraft is controlled with the force inputs provided to the system by both the pilot and the autopilot. In order for the pilot to control the aircraft properly, the mechanical control system must be precisely adjusted in such a way that it remains as balanced as possible. A balanced system enables the use of less powerful autopilot actuators (trim), thus reducing the pilot workload. Springs are used for weight balancing and adjusting the spring tension is important for system stability.

Chinese utility model document CN207565830U, which is included in the state of the art, discloses a helicopter flight control system stabilization adjustment device belonging to the technical field of control system stabilization adjustment device design. The disclosed device comprises a counterweight support, a counterweight support, a balancing weight, an installation part, an attachment bolt and a regulating gasket. One end of the counterweight support is connected to the mounting part, and one side of the mounting part is connected by a threaded mounting face profile. The counterweight adjusts both ends of the mounting part to be connected by the connecting bolt and the counterweight support. The mounting is provided with a rectangular shaped through a hole. Thanks to the system, it is ensured that the working line system finds the mass balance of the system during different positions of the steering arm.

Chinese utility model document CN218112973U of the known state of the art discloses a locking adjustment device for a helicopter operating lever comprising a hemisphere arranged on a cabin floor, an operating lever being arranged in the hemisphere, and a locking retaining ring being arranged. The upper part of the hemisphere and the locking retaining ring are in threaded connection with the operating lever. A damping device and a friction head are arranged between the hemisphere and the locking buckle sleeve; the locking buckle sleeve being rotated to adjust the degree of screwing between the locking buckle sleeve and the operating rod so as to adjust the damping device and the damping device.

By means of a weight balancing mechanism developed with this invention, a system is obtained which stabilizes the control rod which is tilted in one direction due to its weight.

Another object of the present invention is to provide low-cost and effective prevention of the bending movement occurring in the control rod used in the aircraft by using a torque spring.

Another object of the present invention is to enable the user to stabilize the control stick by intervening with the help of a lever when he realizes that the control stick is tilted.

A further object of the present invention is to provide an easily accessible mechanism for adjusting the control forces.

The weight balancing mechanism as defined in the first claim and the dependent claims of the present invention, developed to achieve the object of the invention, comprises a body. The body includes a control rod which is triggered and moved by the user. A joint is connected to the control rod at one end and moves with the control rod. The bracket, which provides a pivot point to the joint, forms an interface between the body and the joint. There is a lever on the body that allows force adjustment. There is a main spring, one end of which is connected to the joint and the other end is connected to the lever and is moved by triggering the lever by the user. There is an adjustment mechanism on the body that keeps the main spring at the tension determined by the user. The main spring is in the first position (I) where it is at a tension predetermined by the user. When the main spring is triggered by the user, there is a second position (II) in which the main spring is moved to have a different amount of tension than the amount of tension it has in the first position (I).

The weight balancing mechanism of the invention comprises a main rod positioned in the adjustment mechanism and in the joint. There is a lever movably attached to the main rod which, when the user triggers the adjustment mechanism, moves the main spring from the first position to the second position and transmits torque to the joint by means of the main spring. The lever allows the main spring to be moved from the first position (I) to the second position (II). In the adjustment mechanism, there is a first washer that allows the main spring to be moved from the first position (I) to the second position (II). Opposite the first washer, the adjustment mechanism is provided with a second washer which moves incrementally on the first washer and enables the spring to be moved to the second position (II) and held in the second position (II).

In one embodiment of the invention, the weight-balancing mechanism comprises a joint and a bracket fixedly attached to the main rod and enabling the control rod to be movably mounted on the housing. The first washer and the second washer are provided with threads which are opposed to each other, and which have an inclined surface in only one direction predetermined by the user. The first washer is fixed on the bracket, and the second washer is provided with teeth on the first washer, which are sequentially moved on the teeth in the first washer, and interference fit on the first washer.

In one embodiment of the invention, the weight balancing mechanism comprises a lever for moving the main spring from the first position to the second position by moving the first washer and the second washer on a user-specified thread.

In one embodiment of the invention, the weight-balancing mechanism comprises an auxiliary spring attached to the main rod, which applies a force to the lever such that the first washer and the second washer are fixed to each other, and the main spring is fixed in the second position (II).

In one embodiment of the invention, the weight-balancing mechanism comprises a protrusion extending outwardly from the lever, which allows the auxiliary spring to be moved in a direction opposite to the force exerted on the lever and the second washer to be moved from the first washer by extending outwardly from the body with the teeth facing each other.

In one embodiment of the invention, the weight balancing mechanism comprises an adjustment mechanism which allows the first washer and the second washer to be brought against each other to correspond to teeth predetermined by the user and the mainspring to be held at a user-specified tension.

In one embodiment of the invention, the weight balancing mechanism comprises a removable bushing on the main rod, on which the lever, the first washer, the second washer, the bracket, the auxiliary spring are removable.

In one embodiment of the invention, the weight-balancing mechanism comprises a mechanism for moving the second washer in the lever together with the lever by the user moving the lever with the main spring in the first position, comprises adjustment mechanism;
- gradual rotation of the teeth of the second washer attached to the lever on the teeth of the first washer on the bracket,
- the end of the main spring connected to the lever moves with the lever while the second washer rotates on the first washer and is moved from the first position (I) to the second position (II),
- when the main spring is in the second position (II) and the user stops the force applied to the lever, the auxiliary spring applies force so that the teeth of the first washer and the second washer engage with each other and the second washer is fixed on the first washer,
- when the main spring is moved to the second position (II), the joint attached to the main spring at one end is moved slightly due to the main spring tension,
- the control rod at one end of the joint is triggered when the joint moves and is moved slightly and stabilized by bringing it to the position specified by the user,
- The user applies a force to a point on the main rod, grabs the projections on the arm and pulls the arm away from the body (perpendicular to the direction in which the main rod extends) and pulls the arm away from the joint,
- removal of the second washer fixedly located on the arm from the first washer on the bracket when the arm is moved away from the joint,
- when the second washer moves away from the first washer, the user changes the tension of the mainspring by applying rotational force to the lever,
- when a force is applied to the user arm in the direction approaching the joint, the teeth on the second washer are inserted into the teeth on the first washer and the main spring moves from the second position (II) to the first position (I),
- the main spring in the first position (I) is compressed by the auxiliary spring in such a way that it is fixed in the first position (I) due to the force exerted on the second pin and the first pin.

In one embodiment of the invention, the weight-balancing mechanism comprises a handle on the lever which allows a user to trigger the lever and move the lever by gripping the lever.

In one embodiment of the invention, the weight balancing mechanism comprises a fuselage having an aircraft surface, a control rod positioned in the fuselage and enabling control of the aircraft in flight, a control surface enabling control of the aircraft, a joint at one end of the control rod and transmitting movement of the control rod to the flight control surface.

In one embodiment of the invention, the weight-balancing mechanism comprises a cover which is attached to the bracket and covers the first washer, the second washer and an auxiliary spring so as to almost completely enclose the lever and the main rod.

In one embodiment of the invention, the weight-balancing mechanism comprises fasteners for attaching the main spring to the joint and lever and for attaching the cover to the bracket and for attaching the handle to the lever.

In one embodiment of the invention, the weight balancing mechanism comprises a cover which locks the system by keeping the first and second washer under pressure by keeping the auxiliary springs under pressure.

In one embodiment of the invention, there is provided a weight balancing mechanism, a bushing which can be inserted and removed from the main rod, a movable joint on the main rod, a lever moved by the user on the main rod, a second washer fixed to the lever, a first washer fixed to the bracket, an auxiliary spring which contacts the lever on the main rod and applies force to the lever, pushing the second washer towards the first washer.

The weight balancing mechanism for achieving the object of the present invention is shown in the accompanying figures;
Figure 1 - Exploded view of the weight balancing mechanism.

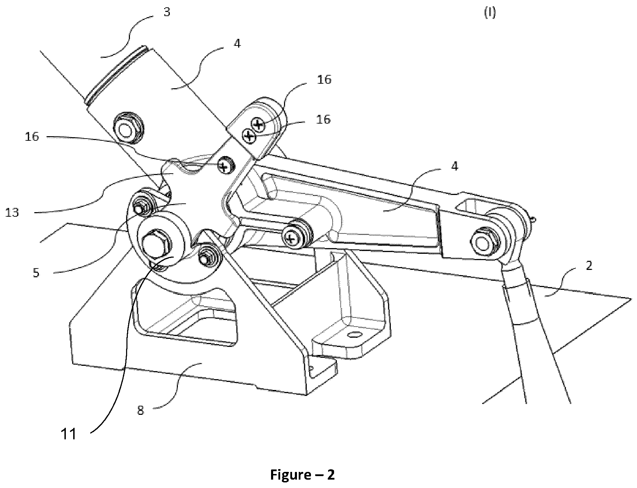

Figure 2 - View of the weight balancing mechanism in the first position (I).

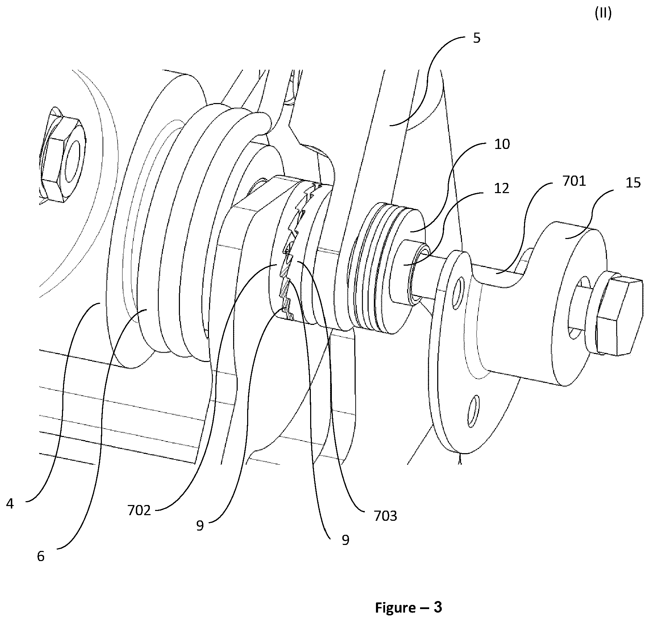

Figure 3 - View of the weight balancing mechanism in the second position (II).

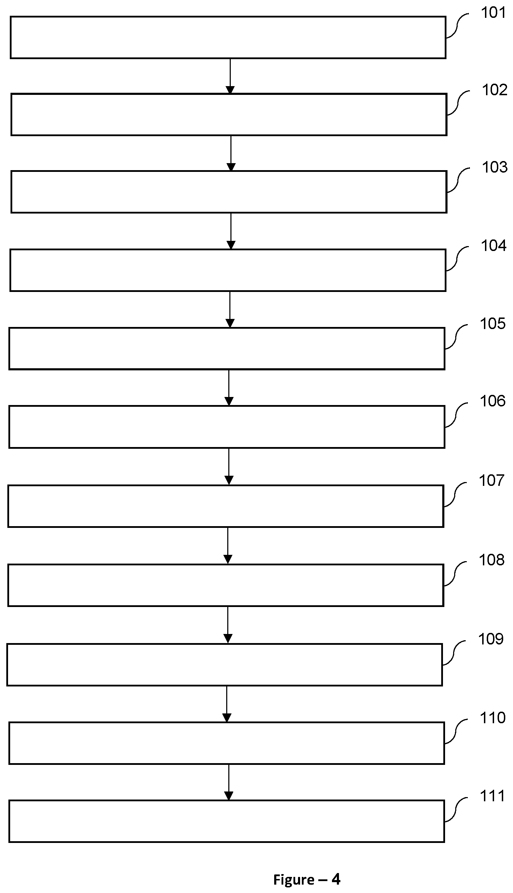

Figure 4 - Flow schematic view of the weight balancing mechanism.

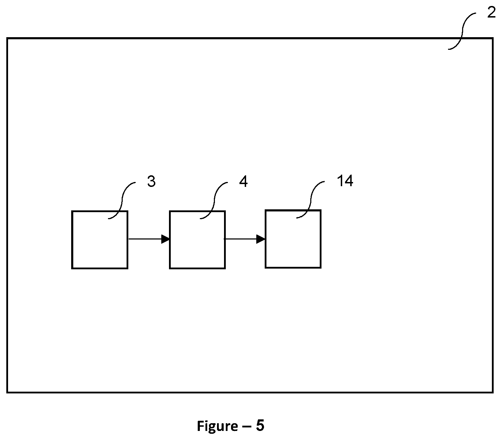

Figure 5 - Schematic view of the body, bracket, joint and control surface.

The parts in the figures are numbered one by one and the equivalents of these numbers are given below.
1. Weight balancing mechanism
2. Body
3. Control rod
4. Joint
5. Lever
6. Main spring
7. Adjustment mechanism
   701. Main rod
   702. First washer
   703. Second washer
8. Bracket
9. Tooth
10. Auxiliary spring
11. Protrusion
12. Bushing
13. Handle
14. Control surface
15. Cover
16. Fastener
   (I) First Position
   (II) Second Position
   101. With the main spring (6) in the first position (I), the user triggers the lever (5) and the second washer (703) attached to the lever (5).
   102. The second washer (703) attached to the lever (5) which is slid gradually rotationally on the teeth (9) on the first washer (702) fixed on the bracket (8).
   103. While the second washer (703) rotates on the main rod (701), the end of the main spring (6) connected to the lever (5) moves with the lever (5) and moves from the first position (I) to the second position (II).
   104. When the main spring (6) reaches the second position (II), the user stops the force applied to the lever (5) and the second washer (703) is fixed on the first washer (702) by the auxiliary spring (10) applying force to the lever (5) so that the first washer (702) and the second washer (703) engage each other on the teeth (9).
   105. By moving the main spring (6) to the second position (II), the joint (4) at one end of the main spring (6) is also at least partially moved due to the tension of the main spring (6).
   106. The control rod (3) at one end of the joint (4) is triggered by the movement of the joint (4) and at least partially moved to a position determined by the user and kept in balance.
   107. The user triggers the lever (5) by applying force to a predetermined point on the main rod (701) and holding the protrusion (11) on the lever (5), pulls the lever (5) so that it is almost perpendicular to the direction in which the main rod (701) extends and applies force so as to move the lever (5) away from the joint (4).
   108. The second washer (703) on the lever (5) moves away from the first washer (702) on the bracket (8) when the lever (5) moves away from the joint (4).
   109. When the second washer (703) moves away from the first washer (702), the user adjusts the tension of the main spring (6) by turning the lever (5).
   110. The user applies force to the lever (5) so that the lever (5) approaches the joint (4) and the teeth (9) on the second washer (703) engage with the teeth (9) on the first washer (702) and the main spring is moved from the second position (II) to the first position (I).
   111. The main spring (6) brought to the first position (I) is held in the first position (I) by the force exerted by the auxiliary spring (10) on the second washer (703) and the first washer (702).

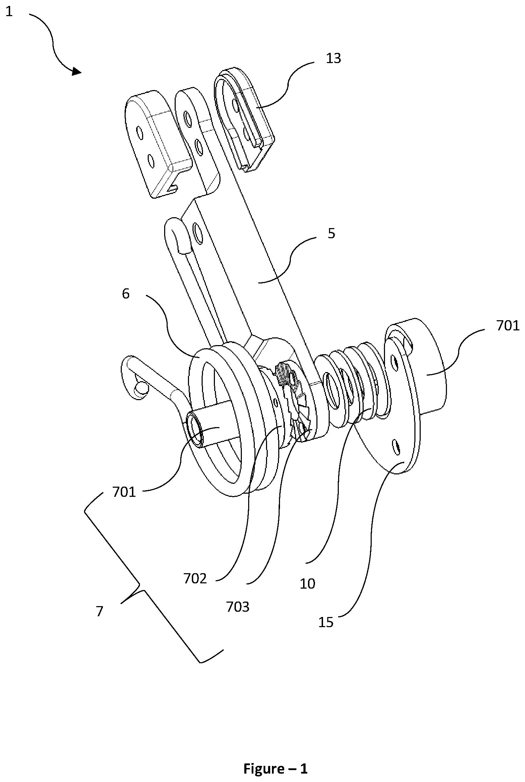

Weight balancing mechanism (1), comprises a body (2), at least one control rod (3) located in the body (2) and moved by the user's triggering at least one joint (4) located at one end of the control rod (3) and moving together with the control rod (3), at least one lever (5) located on the body (2), indirectly connected to the joint (4), which adjusts the force acting on the joint (4) when triggered by the user at least one main spring (6), one end of which is mounted to the joint (4) and the other end to the lever (5), and one end of which moves with the lever (5) when the lever (5) is triggered and moved by the user, thereby adjusting its tension, at least one adjustment mechanism (7) located on the body (2), which allows the main spring (6) to be held at a tension set by the user, a first position (I) in which the main spring (6) is at a tension predetermined by the user, the main spring (6) a second position (II) in which the main spring (6) is held at a tension different from the amount of tension it has in the first position (I) by the user triggering the joint (4). (Figure 1)

The inventive weight balancing mechanism (1), comprises at least one main rod (701) located in the adjustment mechanism (7) and in the joint (4), lever (5) movably attached to the main rod (701) and allowing the user to move the main spring (6) from the first position (I) to the second position (II) and to adjust the torque acting on the joint (4) by triggering the adjustment mechanism (7), a first washer (702), connected to the bracket (8) in the adjustment mechanism (7), allowing the main spring (6) triggered by the lever (5) to be moved from the first position (I) to the second position (II) on the joint (4), a second washer (703) located in the adjusting mechanism (7) opposite the first washer (702), which, by gradual movement on the surface of the first washer (702), allows the main spring (6) to be moved to the second position (II) and held in the second position (II) and the control rod (3) to be at least partially stabilized.

In the body (2) there is a control rod (3) which is triggered and moved by the user. There is a joint (4) which is connected to the control rod (3) at one end and moves together with the control rod (3). A lever (5) is provided on the body (2), connected to the bracket (8) by means of the adjustment mechanism (7), which increases the amount of torque acting on the joint (4) when the user triggers it. There is a main spring (6), one end of which is connected to the joint (4), the other end of which is connected to the lever (5) and is moved by the user triggering the lever (5). There is an adjustment mechanism (7) on the body (2), which ensures that the main spring (6) is held in such a way that it has the tension determined by the user. When the main spring (6) is in the first position (I), it has a tension predetermined by the user. When the main spring (6) is triggered by the user, it is moved to the second position (II) by moving it to have a different amount of tension than the amount of tension it has in the first position (I).

The adjustment mechanism (7) comprises a main rod (701) which is positioned inside the joint (4). A lever (5) is attached to the main rod (701) and allows the joint (4) to be moved when the user triggers the adjustment mechanism (7). The lever (5) allows the main spring (6) to be moved from the first position (I) to the second position (II). The adjustment mechanism (7) includes a first washer (702) for moving the main spring (6) from the first position (I) to the second position (II). In the adjustment mechanism (7), there is a second washer (703), which is located opposite to the first washer (702) and on which the first washer (702), triggered by the lever (5), can gradually move. The second washer (703) allows the main spring to be moved to the second position (II) and held in the second position (II).

In one embodiment of the invention, the weight balancing mechanism (1) comprises a joint (4) and at least one bracket (8) fixed to the main rod (5) and allowing the control rod (3) to be movably mounted on the body (2), a plurality of teeth (9), which are located on the first washer (702) and the second washer (703) in opposition to each other and have surfaces inclined in a single direction predetermined by the user, a first washer (702) mounted on the bracket (8), a second washer (703) which is gradually moved on the teeth (9) on the first washer (702) and engages the first washer (702). In this way, the second washer (703) can be gradually moved on the first washer (702). Thanks to the unidirectional inclination of the teeth (9), a stopper function is provided against the force applied in the opposite direction.

In one embodiment of the invention, the weight balancing mechanism (1) comprises a lever (5) which allows the main spring (6) to be moved from the first position (I) to the second position (II) by sliding the first washer (702) and the second washer (703) on the teeth (9) specified by the user. In this way, the second washer (703) is attached to the teeth (9) on the first washer (702), providing unidirectional movement. In this way, it is possible to move the main spring (6) from the first position (I) to the second position (II) when the teeth (9) on the second washer (703) is shifted to the first washer (702) in the step determined by the user.

In one embodiment of the invention, the weight balancing mechanism (1) comprises at least one auxiliary spring (10) which is attached to the main rod (701) and which exerts a force on the lever (5) such that the first washer (702) and the second washer (703) engage with each other and the main spring (6) is held stationary in the second position (II).

In one embodiment of the invention, the weight balancing mechanism (1) comprises at least one protrusion (11) extending outwardly from the lever (5) to allow the auxiliary spring (10) to be moved in a direction opposite to the force applied to the lever (5) and to allow the second washer (703) to move away from the first washer (702) by extending outwardly from the body (2) so that the teeth (9) are opposed. In this way, the user can apply a travelling force to the lever (5) in the desired direction. By means of the protrusion (11), it is possible to move the second washer away from the first washer.

In one embodiment of the invention, the weight balancing mechanism (1) comprises an adjustment mechanism (7) which allows the first washer (702) and the second washer (703) to be positioned on each other in such a way that the first washer (702) and the second washer (703) are placed on the teeth (9) specified by the user and the main spring (6) is kept at a tension specified by the user. In this way, the second washer (703) is fixed on the desired teeth (9) on the first washer (702). The adjustment mechanism (7) allows the tension of the main spring (6), one end of which is connected to the lever (5) and the other end to the joint (4), to be kept at the tension desired by the user.

In one embodiment of the invention, the weight balancing mechanism (1) comprises at least one bushing (12) removably mounted on the main rod (701) and on which the lever (5), first washer (702), second washer (703), bracket (8) and auxiliary spring (10) are removably mounted. Bushing (12) prevents wear of the main rod (701). When the bushing (12) is worn, it can be removed and replaced with a new bushing (12). In this way, the bracket (8) is protected from external factors.

Weight balancing mechanism (1) in one embodiment of the invention,
- when the main spring (6) is in the first position (I), the user triggers the lever (5) and the second washer (703) attached to the lever (5) to move (101),
- gradual rotational sliding (102) of the second washer (703) attached to the lever (5) on the teeth (9) on the first washer (702) fixed on the bracket (8),
- when the second washer (703) rotates on the first washer (702), the end of the main spring (6) connected to the lever (5) moves with the lever (5) from the first position (I) to the second position (II) (103), comprises a weight balancing mechanism characterized by;

- when the main spring (6) reaches the second position (II), the user stops the force applied to the lever (5) and the second washer (703) is fixed on the first washer (702) by the auxiliary spring (10) applying force to the lever (5) so that the first washer (702) and the second washer (703) engage each other on the teeth (9) (104),
- by moving the main spring (6) to the second position (II), the joint (4) at one end of the main spring (6) is also at least partially moved (105) due to the tension of the main spring (6),
- the control rod (3) located at one end of the joint (4) is triggered by the movement of the joint (4) and at least partially moved to a position determined by the user and kept in balance (106),
- the user triggers the lever (5) by applying force to a predetermined point on the main rod (701) and grasping the protrusion (11) on the lever (5), pulls the lever (5) so that it is almost perpendicular to the direction in which the main rod (701) extends, and applies force so as to move the lever (5) away from the joint (4) (107),
- the second washer (703) on the lever (5) moves away from the first washer (702) on the bracket (8) as the lever (5) moves away from the joint (4) (108),
- when the second washer (703) moves away from the first washer (702), the user adjusts the tension of the main spring (6) by turning the lever (5) (109),
- the user applies force to the lever (5) so that the lever (5) approaches the joint (4) and the teeth (9) on the second washer (703) engage with the teeth (9) on the first washer (702) and the main spring is moved from the second position (II) to the first position (I) (110),
- a main spring (6) brought to the first position (I) is held in the first position (I) by the force exerted by the auxiliary spring (10) on the second washer (703) and on the first washer (702) to perform steps 111. (Figure - 4)

In one embodiment of the invention, the weight balancing mechanism (1) comprises at least one handle (13) located on the lever (5) and allowing a user to grasp the lever (5) and move the lever (5) by triggering the lever (5). By means of the handle (13), the user applies force by grasping the lever (5).

In one embodiment of the invention, the weight balancing mechanism (1) comprises a body (2) forming the surface of the aircraft, a control rod (3) located in the body (2) and allowing the aircraft to be controlled in flight, at least one control surface (14) allowing the aircraft to be controlled in flight, a joint (4) connected to at least one end of the control rod (3) and transmitting the movement of the control rod (3) to the flight control surface (14).

In one embodiment of the invention, the weight-balancing mechanism (1) comprises at least one cover (15) mounted on the bracket (8) so as to substantially completely enclose the first washer (702), the second washer (703) and the auxiliary spring (10) and at least partially enclose the lever (5) and the main rod (701). In this way, the first washer (702), the second washer (703), the auxiliary spring (10), the lever (5) and the main rod (701) are protected from external influences.

In one embodiment of the invention, the weight-balancing mechanism (1) comprises at least one cover (15) mounted on the bracket (8) to substantially completely enclose the first washer (702), the second washer (703) and the auxiliary spring (10) and at least partially enclose the lever (5) and the main rod (701). The cover (15) pressing the auxiliary spring (10) allows the second washer (703) to exert force on the first washer (702).

In one embodiment of the invention, the weight balancing mechanism (1) comprises a plurality of fasteners (16) for attaching the main spring (6) to the joint (4) and the lever (5), for attaching the cover (15) to the bracket (8), for attaching the handle (13) to the lever (5).

In one embodiment of the invention, the weight balancing mechanism (1) comprises a bushing (12) removably mounted on the main rod (701), a joint (4) movably located on the main rod (701), a lever (5) triggered by a user on the main rod (701), The second washer (703) mounted on the lever (5), the first washer (702) mounted on the bracket (8), the auxiliary spring (10) located on the main rod (701) and applying force by contacting the lever (5) and pushing the second washer (703) towards the first washer (702).

## Claims

1. A weight-balancing mechanism (1), **comprising** a body (2), at least one control rod (3) located in the body (2) and moved by the user's triggering, at least one joint (4) located at one end of the control rod (3) and moving together with the control rod (3), at least one lever (5) on the body (2), which moves the joint (4) when triggered by the user, at least one main spring (6), one end of which is mounted to the joint (4) and the other end to the lever (5) and one end of which moves together with the lever (5) when the lever (5) is triggered and moved by the user, thereby adjusting its tension, at least one adjustment mechanism (7) located on the body (2), which allows the main spring (6) to be held at a tension set by the user, a first position (I) in which the main spring (6) is at a tension predetermined by the user, a second position (II) in which the main spring (6) is held at a tension different from the amount of tension it has in the first position (I) by triggering the user's joint (4) **is characterized by** at least one main rod (701) located in the adjustment mechanism (7) and in the joint (4), the lever (5) movably attached to the main rod (701) and enabling the user to move the main spring (6) from the first position (I) to the second position (II) by triggering the adjustment mechanism (7), a first washer (702) within the adjustment mechanism (7) and connected to the joint (4), allowing the main spring (6) triggered by the lever (5) to be moved from the first position (I) to the second position (II) on the joint (4), a second washer (703) located in the adjusting mechanism (7) opposite the first washer (702), which, by gradual movement on the surface of the first washer (702), allows the main spring (6) to be moved to the second position (II) and held in the second position (II) and the control rod (3) to be at least partially stabilized.

2. A weight balancing mechanism (1) according to claim 1, **characterized by** at least one bracket (8) fixed to the joint (4) and the main spring (6) and allowing the control rod (3) to be movably mounted on the body (2), a plurality of teeth (9), which are located on the first washer (702) and the second washer (703) in opposition to each other and have surfaces inclined in a single direction predetermined by the user, the first washer (702) mounted on the bracket (8), the second washer (703) which is gradually moved on teeth (9) located on the first washer (702) and which engages the first washer (702).

3. A weight balancing mechanism (1) according to claim 1 or 2, **characterized by** the lever (5) allows the main spring (6) to be moved from the first position (I) to the second position (II) by sliding the first washer (702) and the second washer (703) on the user-specified teeth (9).

4. A weight balancing mechanism (1) according to any one of the preceding claims, **characterized by** at least one auxiliary spring (10) is attached to the main rod (701), exerting a force on the lever (5) so that the first washer (702) and the second washer (703) engage with each other and allowing the main spring (6) to be held stationary in the second position (II).

5. A weight balancing mechanism (1) according to claim 4, **characterized by** at least one protrusion (11) extending outwardly from the lever (5), which allows the auxiliary spring (10) to be moved in a direction opposite to the force exerted on the lever (5) and to cause the second washer (703) to move away from the first washer (702) by extending outwardly from the body (2) so that the teeth (9) of the second washer (703) are opposed.

6. A weight balancing mechanism (1) according to any one of claims 2-5, **characterized by** an adjustment mechanism (7) that allows the first washer (702) and the second washer (703) to be positioned on each other in such a way that the first washer (702) and the second washer (703) are placed on the user-specified teeth (9) and the main spring (6) is kept at a user-specified tension.

7. A weight balancing mechanism (1) according to any one of claims 4-6, **characterized by** at least one bushing (12) removably mounted on the main rod (701) and on which the lever (5), the first washer (702), the second washer (703), the bracket (8) and the auxiliary spring (10) are removably mounted.

8. A weight balancing mechanism (1) according to any one of claims 5-7, **characterized by** an adjustment mechanism (7) enabling to perform the steps
- moving the lever (5) and the second washer (703) attached to the lever (5) by the user triggering the main spring (6) in the first position (I) (101),
- sliding of the second washer (703) attached to the lever (5) on the teeth (9) on the first washer (702) fixed on the bracket (8) by gradual rotational movement (102),
- moving the end of the main spring (5) connected to the lever (5) from the first position (I) to the second position (II) by moving together with the lever (5) while the second washer (702) rotates on the first washer (701) (103),
- fixing the second washer (703) on the first washer (702) by the user stopping the force applied to the lever (5) when the main spring (6) reaches the second position (II) and the auxiliary spring (10) applying force to the lever (5) in such a way that the first washer (702) and the second washer (703) engage each other on the teeth (9) (104),
- at least partially moving the joint (4) at one end of the main spring (6) by moving the main spring (6) to the second position (II) due to the tension of the main spring (6) (105),
- moving the control rod (3) located at one end of the joint (4) at least partially by triggering it with the movement of the joint (4) and to move it to the position specified by the user and to keep it in balance (106),
- the user triggering the lever (5) by applying force to a predetermined point on the main rod (701) and grasping the projections (11) on the lever (5), pulling the lever (5) perpendicular to the direction in which the main rod (701) extends and applying force to move the lever (5) away from the joint (4) (107),
- moving the second washer (703) on the lever (5) away from the first washer (702) on the bracket (8) as the lever (5) moves away from the joint (4) (108),
- adjusting the tension of the main spring (5) by the user turning the lever (5) when the second washer (703) moves away from the first washer (702) (109),
- applying force to the lever (5) by the user so that the lever (5) approaches the joint (4) and the teeth (9) on the second washer (703) engage with the teeth (9) on the first washer (702) and the main spring is moved from the second position (II) to the first position (I) (110),
- holding the main spring (6) stationary in the first position (I) by means of the force exerted by the auxiliary spring (10) on the second washer (703) and the first washer (702) in the first position (I) (111).

9. A weight balancing mechanism (1) according to any one of the preceding claims, **characterized by** at least one handle (13) located on the lever (5) and enabling the user to grasp the lever (5) and move the lever (5) by triggering it.

10. A weight balancing mechanism (1) according to any one of the preceding claims, **characterized by** the body (2) forming the surface of an aircraft, a control rod (3) located in the body (2) and allowing the aircraft to be controlled in flight, at least one control surface (14) allowing the aircraft to be controlled in flight, the joint (4) connected to at least one end of the control rod (3) and transmitting the movement of the control rod (3) to the flight control surface (14).

11. A weight balancing mechanism (1) according to any one of claims 4-10, **characterized by** at least one cover (15) fitted on the bracket (8) so as to completely enclose the first washer (702), the second washer (703) and the auxiliary spring (10) and at least partially enclose the lever (5) and the main rod (701).

12. A weight balancing mechanism (1) according to claim 11, **characterized by** a plurality of fasteners (16) allowing the main spring (6) to be attached to the joint (4) and the lever (5), the cover (15) to be attached to the bracket (8), the handle (13) to be attached to the lever (5).

13. A weight balancing mechanism (1) according to any one of claims 4-12, **characterized by** a bushing (12) removably fitted on the main rod (701), the joint (4) movably located on the main rod (701), the user-triggered lever (5) on the main rod (701), the second washer (703) mounted on the lever (5), the first washer (702) mounted on the bracket (8), the auxiliary spring (10) located on the main rod (701) and exerting force by contacting the lever (5) and pushing the second washer (703) towards the first washer (702).
